# EUROPEAN PATENT APPLICATION

(11) **EP 3 828 019 A1**
(43) Date of publication of application: **02.06.2021**
(21) Application number: 19212566.4
(22) Date of filing: 29.11.2019
(51) Int. Cl.: B60H 1/22, H05B 3/26, B60R 13/02, H05B 3/28

(54) **HEATING ELEMENT FOR A TRIM COMPONENT FOR CLADDING AN INTERIOR SPACE OF A MEANS OF PASSENGER TRANSPORT**

(71) Applicant: Motherson Innovations Company Limited, London EC3A 6AP (GB)
(72) Inventor: Johannböke, Eckhard, 79346 Endingen (DE); Fiebrandt, Martin, 83371 Stein a. d. Traun (DE)
(74) Representative: Westphal, Mussgnug & Partner Patentanwälte mbB

(57) **Abstract**

The present invention relates to a heating element (22) for a trim component (41) for cladding an interior space (54) of a means of passenger transport (30), in particular a vehicle (52), the heating element (22) comprising carrier layer (26), and at least two resistive elements (24) being arranged on the carrier layer (26) or embedded into the carrier layer (26), and connectable or connected to a power grid (28) of the means of passenger transport (30), the resistive elements (24) running substantially parallel to each other in or on the carrier layer (26). Beyond that the present invention relates to a trim component (41) comprising such a heating element (22) and to a means of passenger transport (30) comprising such a trim component (41).

## Description

The present invention relates to a heating element for a trim component for cladding an interior space of a means of passenger transport, in particular a vehicle. Beyond that the present invention relates to a trim component comprising such a heating element and to a means of passenger transport comprising such a trim component.

The means of passenger transport is embodied in particular as a vehicle, but can also be a ship, an aircraft, a train or the like. In the following the disclosure is explained with reference to vehicles, however, the explanations shall also apply to other means of passenger transport, such as ships, aircraft, trains or the like.

In the pursuit of increasing the passenger comfort and safety more and more parts of the means of passenger transport can be heated. CN 20 2551 387 U, US 2018 007 0411 A and JP 201 0251 230 A disclose a heating that can be integrated into the wind screen of a vehicle to avoid fogging and frosting. Due to the use of a mesh of very thin wires they are almost invisible and thus do not appreciably decrease the transparency of the glass.

At present, the interior space of a vehicle typically is heated in two ways. In the first way an air conditioner heats air. The heated air is then distributed through various outlets inside the passenger compartment using an air distribution system comprising for example defrost and/or air ducts. As a consequence areas in the passenger compartment are heated that do not require heating. In addition, the energy required to heat the air is high.

The second way relates to a seat heating or an armrest heating. In a seat heating or an armrest heating a heating mat with heating wires or heating foils with electrically conductive pastes are employed. Heating mats and heating foils are additional components which cause additional costs, in particular as they should be mounted or integrated such that they are not visible to a vehicle passenger.

In order to overcome these disadvantages DE 10 2008 045 757 A1 discloses a skin that may be laminated to trim components of a vehicle, the skin being made of a plastic like polyvinylchloride. The skin is connected to a conductive layer that is provided with an embedded electrically conductive path. The conductor path consists of a mixture of the plastic material of the skin and a conductive material. Thus there are at least two layers. The conductive material is incorporated into the plastic material by a rolling kneading process. To produce the skin a sintering process or a spray process is needed. To connect the conductive layer to the skin an adhesive, a solvent and a roller process need to be employed.

Instead of using a conductive layer it is also possible to arrange one single resistive element, sometimes also referred to as resistor or resistance elements, inside the trim component near its surface. The heat generated by the electric resistance is used to heat the trim component. The resistive element is distributed as evenly as possible inside the trim component to provide an even temperature distribution. For this purpose the resistive element is arranged in a meander or serpentine fashion inside the trim component. One particular embodiment of such a trim component is an armrest that has a higher degree of resilience compared to other trim components such as an instrument panel. A heated armrest together with its resilience is offering a high comfort for the persons using the means of transport.

Such a resistive element is usually made of a brittle material. Due to the resilience of the armrest it gets deformed when a passenger places its arm thereon. The deformation of the armrest is transmitted to the resistive element. Due to its brittleness the resistive element may be damaged or even destroyed by the deformation of the armrest. The proper functioning of the heating element may not be given anymore.

As mentioned the resistive element is arranged in a meander or serpentine fashion on or in the carrier layer. As the electric current is aiming to flow along the shortest path through the resistive element there is an increased current flow on the inner side of the arcuate sections of the resistive element. The increased current flow generates a higher electric power and thus to areas of elevated temperature. These areas of elevated temperature are also referred to as hot spots. The hot spots counteract the aim of an even temperature distribution within the trim component.

A further effect to consider is that the electric resistance of the resistive element is changed when deformed such that an even temperature distribution inside the resilient cladding component is adversely affected.

It is one task of one embodiment of the present disclosure to propose a heating element for a trim component for cladding an interior space of a means of passenger transport, in particular a vehicle, which may be used in trim components of high resilience without the danger of being damaged or destroyed by the deformation in use of that trim component. Moreover it is one task to avoid hot spots inside the heating element or the trim component when heated. Moreover, an embodiment of the present invention has the object to provide a trim component being equipped with such a heating element and to provide a means of passenger transport, in particular a vehicle, comprising such a trim component.

The task is solved by the features specified in claims 1, 8 and 12. Advantageous embodiments are the subject of the dependent claims.

According to an embodiment of the present disclosure a heating element for a trim component for cladding an interior space of a means of passenger transport, in particular a vehicle, comprises
- carrier layer, and
- at least two resistive elements
   o being arranged on the carrier layer or embedded into the carrier layer, and
   o connectable or connected to a power grid of the means of passenger transport,
- the resistive elements running substantially parallel to each other in or on the carrier layer.

The core idea of the present disclosure is to subdivide one single resistive element into at least two resistive elements, wherein a number of 3 to 5 resistive elements has been recognized as particularly suitable. The size of the cross section of the plurality of resistive elements may be chosen such that the area-related electric power is roughly the same as is the case for one single resistive element as known from the prior art. The size of the cross section of one of the plurality of resistive elements is smaller compared to the size of the single resistive element according to the prior art. As a consequence the proposed heating element may generate the same heat inside the cladding component as a heating element comprising one single resistive element.

By using a plurality of resistive elements the flexibility of the resistive elements is increased compared to a heating element comprising one single resistive element only. Moreover, as the plurality of resistive elements are spaced apart from each other the effect of a given deformation of the trim component is distributed to the plurality of the resistive elements. The space between two adjacent resistive elements may act as an expansion gap. While one resistive element may be deformed to a high degree, the neighboring one may be deformed to a lesser degree. The danger of being damaged or destroyed by the deformation in use of the respective cladding component is significantly reduced.

Beyond that the current flowing through one individual resistive element of the proposed heating element is smaller compared to a heating element comprising one single resistive element. The formation of hot spots inside the curved sections of the proposed heating element is reduced accordingly.

As mentioned, the deformation of the resistive elements may change the electric resistance leading to further hot spots even outside the curved sections. As the deformation is also distributed to the plurality of the resistive elements the size of hot spots is reduced. As a consequence the use of a plurality of resistive elements leads to a more even temperature distribution inside the cladding component also when deformed.

In a further embodiment the resistive elements are arranged in a meander or serpentine fashion in or on the carrier layer. The arrangement in the meander or serpentine fashion enables a high area coverage of the cladding component that contributes to an even temperature distribution inside the cladding component. Moreover, the high area coverage can be reached without a crossing of the resistive elements.

In another embodiment the resistive elements form at least two straight sections running substantially parallel to each other connected to each other by an arcuate connection section. This arrangement further contributes to an even temperature distribution inside the cladding component.

According to an advanced embodiment the resistive elements consist of a conductive paste or conductive lacquer, the conductive paste or conductive lacquer comprising silver and/or carbon fibers. In particular, the silver or carbon conductive pastes are particularly suitable for providing a flat heating element. The respective cladding component can be inexpensively manufactured and uniformly heated.

In a refined embodiment the resistive elements are printed or sprayed onto the carrier layer or applied to the carrier layer by means of a dispenser. The resistive elements may be manufactured in a very thin and flexible way. Furthermore, the resistive element can be printed onto the carrier layer, for example using the screen printing process. The thickness of the resistive elements and thus their electrical resistance can be changed relatively easily, especially when employing the screen printing process.

In accordance to a further embodiment the carrier layer is made of plastic, preferably of a thermoplastic polyurethane. In this embodiment the heating element may be injection-molded such that a large number of heating elements may be produced within a short time and at low costs.

In another embodiment the carrier layer is self-supporting. In this embodiment it is not necessary to provide a further support layer for stabilizing the heating element. It is sufficient to fasten the heating element at its edges with a neighboring component of the means for passenger transport. The heating element as such may act as a cladding component which is simple in the manufacturing and mounting.

Another implementation of the invention is directed to a trim component for cladding an interior space of a means of passenger transport, in particular a vehicle, comprising a heating element according to one of the embodiments described above. The advantages and technical effects described with reference to the heating element equally apply to the trim component. In short the danger of a damage or destruction of the resistive elements by the deformation of the respective cladding component is reduced. Moreover the formation of hot spots is reduced leading to a more even temperature distribution inside the trim component.

In a refined implementation the carrier layer is embodied as a slush skin forming a surface of the trim component, the resistive elements being arranged on the slush skin. Slush skins are often used for covering instrument panels and the like. Thus, it is also possible to use the surface of an instrument panel for heating the interior of a means for passenger transport, in particular of a vehicle. The bigger the heated surface the quicker and more even the interior can be heated. The passenger comfort is increased.

In accordance with a furtherly developed implementation the trim component comprises a resilient top layer, the heating element being fastened to the top layer. In this implementation the trim component can be provided with resilient properties making the trim component suitable as an armrest or a part of the central console. Further implementations could be plane or irregularly bended, concavely or convexly bended surfaces arranged in a vehicle. Such surfaces could be in particular the interior door cladding, the side cladding of a central console, the glove box, surfaces below the steering wheel and above the footwell, the floor cover in the front and the back of the vehicle.

According to another implementation the trim component comprises a decorative element, the heating element being fastened to the decorative element. In this implementation decorative elements in particular of a vehicle may be used for heating the interior space thereby enhancing the passenger comfort.

Another aspect of the invention is directed to a means of passenger transport comprising a trim component according to one of the implementations described above for cladding an interior space of the means for passenger transport. The advantages and technical effects described with reference to the heating element and the trim component equally apply to the means of passenger transport. In summary the danger that the resistive elements may be damaged or destroyed by the deformation of the respective cladding component is reduced. Moreover the formation of hot spots is reduced leading to a more even temperature distribution inside the trim component.

The present invention is described in detail with reference to the drawings attached wherein
- Figure 1: is a principle illustration of a heating element according to the prior art,
- Figure 2: is a principle illustration of a first embodiment of the heating element according to the present invention,
- Figure 3: is a principle illustration of a second embodiment of the heating element according to the present invention,
- Figure 4: is a principle section view through a heating element in accordance with a third embodiment of the present invention,
- Figure 5: is a principle section view through a first embodiment of a trim component according to the present invention, comprising a heating element of one of the embodiments shown in Figures 1 to 4,
- Figure 6: is a principle section view through a second embodiment of a trim component according to the present invention, comprising a heating element of one of the embodiments shown in Figures 1 to 4,
- Figure 7: is a principle section view through a third embodiment of a trim component according to the present invention, comprising a heating element of one of the embodiments shown in Figures 1 to 4,
- Figure 8: is a principle view of a vehicle comprising a trim component according to one embodiment of the present invention, and
- Figure 9: is a principle perspective view of a side door of the vehicle shown in figure 8 comprising the trim component.

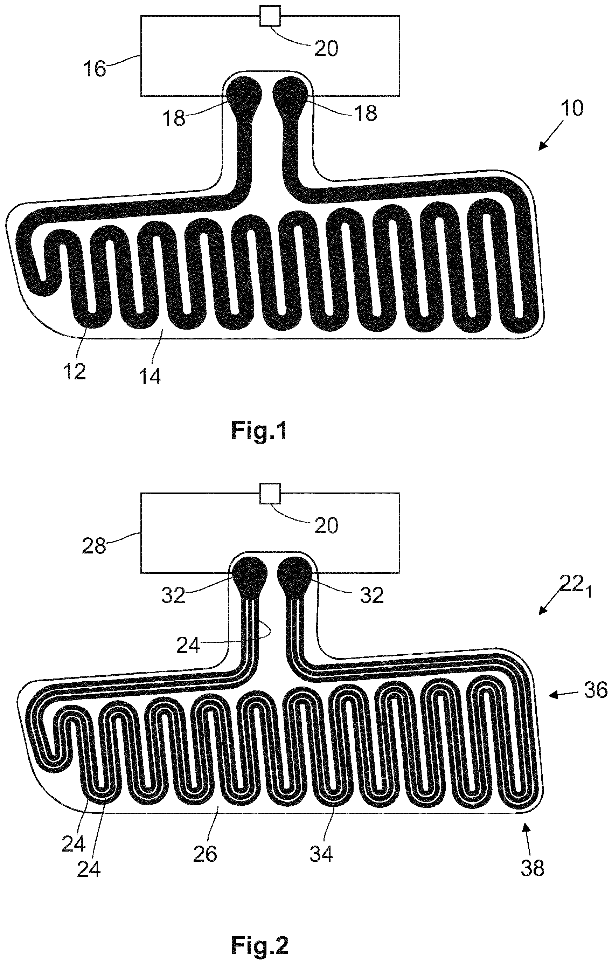

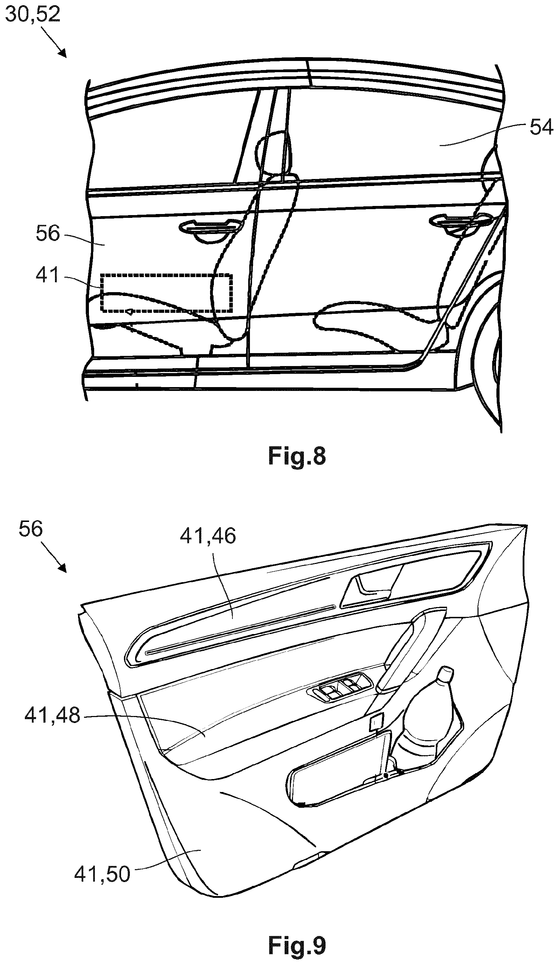

In Figure 1 a heating element 10 known in the state of the art is shown by means of a principle sketch. The heating element 10 comprises one single and coherent resistive element 12 that is arranged on a carrier layer 14. On its two ends the resistive element 12 is connected to a power grid 16 of a means for passenger transport 30, in particular of a vehicle 52 (Figures 8 and 9) by connecting elements 18. The power grid comprises at least one energy storage 20 for storing electrical energy. When activated the resistive element 12 is heated up by its electric resistance. The generated heat is then transferred to the environment of the heating element 10, in particular to a trim component to which the heating element 10 is fastened (not shown).

In Figure 2 a heating element 22₁ according to one embodiment of the present invention is shown by means of a principle sketch. To enhance the comparability with the heating element 10 known from the prior art the perspective and the scale of Figure 1 and Figure 2 are similar.

The heating element 22₁ according to the embodiment shown in Figure 2 comprises in total three resistive elements 24 arranged on a carrier layer 26. The three resistive elements 24 are running substantially parallel to each other. On their ends they are connected to a power grid 28 of a means for passenger transport 30, in particular of a vehicle 52 (Figures 8 and 9) by means of connecting elements 32.

The resistive elements 24 are formed by a conductive paste 34 or a conductive lacquer 34. The conductive paste 34 or conductive lacquer 34 may comprise silver and/or carbon fibers (not shown). The carrier layer 26 is made of plastic, in particular of thermoplastic polyurethane. The functional principle is the same as described for the heating element 10 according to the prior art.

When compared to the single resistive element 12 of the heating element 10 of the prior art the resistive elements 24 are smaller. The size of their cross section is chosen such that the same area related electric power is introduced into the resistive elements 24 and thus a comparable heat is generated in use.

As evident from Figures 1 and 2 both the single resistive element 12 as well as the three resistive elements 24 are arranged in a meander or serpentine fashion on the carrier layer 14, 26 so as to form straight sections 36 and arcuate connection sections 38, the straight sections 36 substantially running parallel to each other. In the arcuate connection sections 38 of the single resistive element 12 the formation of hot spots, i.e., areas of elevated heat generation, is stimulated. Due to the smaller size of the three resistive elements 24 the formation of the hot spots can be significantly reduced compared to one single resistive element 12.

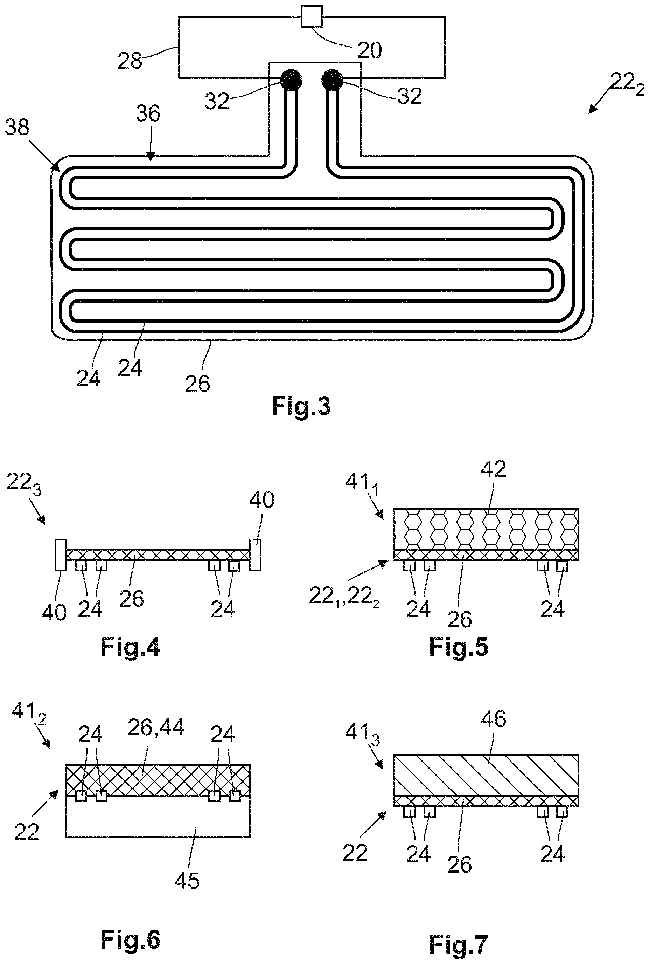

In Figure 3 a second embodiment of the heating element 22₂ is shown. In this case two resistive elements 24 are arranged substantially parallel to each other. Like in Figure 2 the extension of the carrier layer 26 in a first dimension is bigger than in a second dimension. In However, the resistive elements 24 are arranged such that the number of arcuate connection sections 38 is reduced, thereby further reducing the risk of the formation of hot spots.

Figure 4 shows a third embodiment of the heating element 22₃ by means of a principle cross section. In the third embodiment the carrier layer 26 is self-supporting and is thus sufficiently rigid that no further support layer is needed. The heating element 22₁ can be fastened to neighboring components 40 of the means of passenger transport 30. Gaps can be bridged in a comparatively easy way.

In Figure 5 a first embodiment of a trim component 41₁ of a means for passenger transport 30 is illustrated by means of a principle cross section. The trim component 41₁ comprises a heating element 22₁, 22₂ according to the first or second embodiment. The heating element 22 is connected to a resilient top layer 42, e.g., of an armrest 48 of the means for passenger transport 30 (see Figures 8 and 9). The resilient top layer 42 gets deformed once a passenger places its arm on the top layer 42. The deformation is transferred to the heating element 22 and thus to the resistive elements 24. However, due to the smaller size of the cross sections they are more flexible compared to the single resistive element 12 of the heating element 10 according to the prior art. The danger of damage or destruction of the heating element 22 according to the present invention is thus reduced. Moreover, the deformation of the resistive elements 24 leads to a change of the electric resistance. However, the influence of the deformation on the electrical resistance of the resistive elements 24 of the heating element 22 according to the present disclosure is significantly smaller compared to the single resistance element of the heating element 10 of the prior art.

In Figure 6 a second embodiment of the trim component 41₂ of the present disclosure is shown. In the second embodiment the carrier layer 26 of the heating element 22 is formed as a slush skin 44 that may form the surface of an instrument panel or similar components of the cladding of an interior space 54 of a means for passenger transport 30 (Figure 8). The resistive elements 24 are arranged on the carrier layer 26 so that they are located very close to the free surface. The carrier layer 26 may be applied to a support layer 45 of the respective component. The surface of the instrument panel can be used for passenger transport 30.

Figure 7 shows a third embodiment of the trim component 41₃ of the present disclosure. In this case the trim component 41₃ comprises a decorative element 46 on which the heating element 22₁ is fastened. Thus the surface of the decorative element 46 can be used for heating an interior space 54 of the means for passenger transport 30.

In Figure 8, a means of passenger transport 30, in this case a vehicle 52 is shown by means of a principle side view, which is equipped with at least one trim component 41 according to the invention, which is arranged in one of the vehicle 52 side doors 56.

Figure 9 shows one of the vehicle 52 side doors of the motor vehicle 52 from a perspective view, in this case the front left vehicle 52 door comprising a door insert 50. It can be seen that one of the trim component 41 forms an armrest 48 of the vehicle 52 door. However, further trim components 41 may also comprise the decorative element 46 and/or the door insert 50. The trim component 41 can be used to heat up the interior space 54 of the vehicle 52.

### Reference list

- 10: heating element prior art
- 12: resistive element
- 14: carrier layer
- 16: power grid
- 18: connecting element
- 20: energy storage
- 22: heating element
- 22₁ - 22₃: heating element
- 24: resistive element
- 26: carrier layer
- 28: power grid
- 30: means of passenger transport
- 32: connecting element
- 34: conductive layer
- 36: straight section
- 38: arcuate section
- 40: neighboring component
- 41: trim component
- 41₁ - 41₃: trim component
- 42: top surface
- 44: slush skin
- 45: support layer
- 46: decorative element
- 48: armrest
- 50: door insert
- 52: vehicle
- 54: interior space

## Claims

1. Heating element (22) for a trim component (41) for cladding an interior space (54) of a means of passenger transport (30), in particular a vehicle (52), the heating element (22) comprising
- carrier layer (26), and
- at least two resistive elements (24)
∘ being arranged on the carrier layer (26) or embedded into the carrier layer (26), and
∘ connectable or connected to a power grid (28) of the means of passenger transport (30),
- the resistive elements (24) running substantially parallel to each other in or on the carrier layer (26).

2. Heating element (22) according to claim 1,
**characterized in that** the resistive elements (24) are arranged in a meander or serpentine fashion in or on the carrier layer (26).

3. Heating element (22) according to claim 2,
**characterized in that** the resistive elements (24) form at least two straight sections (36) running substantially parallel to each other connected to each other by an arcuate connection section (38).

4. Heating element (22) according to one of the preceding claims,
**characterized in that** the resistive elements (24) consist of a conductive paste (34) or conductive lacquer (34), the conductive paste (34) or conductive lacquer (34) comprising silver and/or carbon fibers.

5. Heating element (22) according to claim 4,
**characterized in that** the resistive elements (24) are printed or sprayed onto the carrier layer (26) or applied to the carrier layer (26) by means of a dispenser.

6. Heating element (22) according to one of the preceding claims,
**characterized in that** the carrier layer (26) is made of plastic, preferably of a thermoplastic polyurethane.

7. Heating element (22) according to one of the preceding claims,
**characterized in that** the carrier layer (26) is self-supporting.

8. Trim component (41) for cladding an interior space (54) of a means of passenger transport (30), in particular a vehicle (52), the trim component (41) comprising a heating element (22) according to one of the preceding claims.

9. Trim component (41) according to claim 8,
**characterized in that** the carrier layer (26) is embodied as a slush skin (44) forming a surface of the trim component (41), the resistive elements (24) being arranged on the slush skin (44).

10. Trim component (41) according to claim 8,
**characterized in that** the trim component (41) comprises a resilient top layer (42), the heating element (22) being fastened to the top layer (42).

11. Trim component (41) according to claim 8,
**characterized in that** the trim component (41) comprises a decorative element (46), the heating element (22) being fastened to the decorative element (46).

12. Means of passenger transport (30), in particular a vehicle (52), comprising a trim component (41) according to one of the claims 9 to 11 for cladding an interior space (54) of the means for passenger transport (30).
